(19) Europäisches Patentamt / European Patent Office / Office européen des brevets

(11) **EP 3 188 016 A1**

(12) **EUROPEAN PATENT APPLICATION**

(43) Date of publication:
**05.07.2017  Bulletin 2017/27**

(51) Int Cl.:
***G06F 9/50*** (2006.01)

(21) Application number: **15307158.4**

(22) Date of filing: **29.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Harmonic Inc.
San Jose, CA 95134 (US)**

(72) Inventors:
• **LE BARS, Eric
35850 Geveze (FR)**
• **MAHE, Arnaud
35320 Poligne (FR)**
• **HENRY, David
35450 Dourdain (FR)**

(74) Representative: **Nguyen Van Yen, Christian
Marks & Clerk France
Conseils en Propriété Industrielle
Immeuble Visium
22, Avenue Aristide Briand
94117 Arcueil Cedex (FR)**

(54) **SCHEDULER OF COMPUTER PROCESSES FOR OPTIMIZED OFFLINE VIDEO PROCESSING**

(57) The invention relates to a scheduler of video processes to be run on a cluster of physical machines, said scheduler comprising: first processing logic configured to split a video content into a plurality of video sequences based on at least one of a scene cut detection, a minimum duration or a maximum duration, said video sequences to be encoded on Operating-System-Level virtual environments running in parallel; second processing logic configured to calculate, for each video sequence, based on the video sequence and a target coding time of the video content, a target computing capacity of an Operating-System-Level virtual environment to code said video sequence; third processing logic configured to create, for each video sequence, an Operating-System-Level virtual environment of the target computing capacity, and cause an allocation of the Operating-System-Level virtual environment to a physical machine in the cluster of physical machines.

FIG.2

EP 3 188 016 A1

## Description

FIELD OF THE INVENTION

The present invention relates to the field of Virtual Machine handling for video processing. More specifically, it relates to the management of VMs and video processes.

BACKGROUND PRIOR ART

In computing, a virtual machine (also designated by the acronym VM) is an emulation of a particular computer system. Virtual machines operate based on the computer architecture and functions of a real or hypothetical computer, and their implementations may involve specialized hardware, software, or a combination of both.

Classification of virtual machines can be based on the extent to which they implement functionalities of targeted real machines. That way, system virtual machines (also known as full virtualization VMs) provide a complete substitute for the targeted real machine and a level of functionality required for the execution of a complete operating system. On the other hand, process virtual machines are designed to execute a single computer program by providing an abstracted and platform-independent program execution environment.

The use of VMs provides great flexibility in the handling of tasks to execute in parallel. Indeed, VMs can be created and deleted very easily to meet the needs of tasks processing that evolve in real time. In multimedia processing, moreover, VMs provide great flexibility for creating machines with the desired properties, since the actual characteristics of a VM are a combination of software characteristics and characteristics of the physical machine on which the VM is executed.

In a multimedia head-end server, a plurality of machines, whether virtual or physical, are usually available. When a plurality of tasks are to be executed on a plurality of machines, an orchestrator may be used to dispatch the tasks to perform amongst the machines. Tasks may be created, executed, then ended, and the orchestrator will allocate a task to a machine for its execution.

The use and deployment of VMs is particularly suited for computationally-intensive tasks, such as video encoding or transcoding.

The development of VOD (Video On Demand) services enhanced the need for VM use in video encoding or transcoding. Indeed, many video programs are nowadays available on demand on dedicated platforms. This is for example the case for TV channels recording programs and rendering them available for future download or review on dedicated websites or platforms. For example, some TV channels have a website where each episode of the news, weather reports, TV shows, etc... is available as soon as possible once the program has been broadcast by the TV channel.

In order to provide the best possible service to customers, this usually implies to encode large video files with the best possible quality and as low as possible an encoding time. In order to achieve this goal, the encoding is usually performed using a plurality of VMs dispatched on a cluster of physical machines in the following way: a dispatcher splits a video content into a plurality of video sequences of equal sizes. Then it creates, for each video sequence, a predefined VM configured for performing video encoding. Each video sequence is then encoded in parallel by a VM. Dispatching video encoding tasks on a plurality of VMs allows the achievement of an important reduction of video encoding time.

However, this method has a major drawback for video encoding: when splitting a video file into video sequences of equal sizes, the separation of video sequences does not necessarily occur at a scene change. This implies starting coding some GOPs (Groups Of Pictures) in the middle of scenes. It is well known in video compression that separating the GOPs at scene cuts is a very important feature to improve video coding efficiency. Thus, a scheduler of video processes that splits a video content into video sequences of equal sizes, although efficiently dividing computing load amongst VMs, produces video files of lesser quality, or bigger size.

On the other hand, it is possible to split the video content at scene cuts, and dispatch the different video sequences, which correspond to different scenes of the video content, to the predefined VMs. This solution leads to an efficient video coding, and video files with optimized size and quality. However, the coding time of video sequences is unpredictable because depending on the nature of the video content, some video sequences may be much longer to code than others. It is also possible that, even with an equivalent size, some video sequences have a very different complexity, thus a very different coding time. It is for example known that complex scenes such as waves in the water or explosions are more complex to encode than more simple scenes, such as video travelling in a landscape.

Thus, when encoding these scenes in parallel, encoding time and resources of the cluster of machines will likely not be optimized. The total encoding time of the video content will be the encoding time of the longest / most complex scene, even if all other scenes are much faster to encode. Meanwhile, a VM which is dispatched in a physical machine reserves its nominal amount of resources in the physical machine, even if it is inactive for a period of time and these resources are then unused. Therefore, all VMs but the VM encoding the longest and / or most complex scene would have finished encoding their video sequence before the completion of global encoding. In this case, these VMs remain dispatched amongst physical machines of the cluster, and preempt resources which are not used. Physical resources are then unused. This situation has an important impact on cost, such as a need of extra resources in clusters of machines, a need for extra machines in the cluster, and an excessive consumption of electricity for running and cooling these physical machines.

There is therefore a need for a scheduler of video processes to encode or transcode a video content, said scheduler being able to allocate video processing tasks amongst a number of virtual machines on a cluster of physical machines, while being able at the same time to encode or transcode the video at an optimal quality/rate ratio, and to ensure that all virtual machines execute their video processing tasks in a comparable timeframe.

SUMMARY OF THE INVENTION

To this effect, the invention discloses a scheduler of video processes to be run on a cluster of physical machines, said scheduler comprising: first processing logic configured to split a video content into a plurality of video sequences based on at least one of a scene cut detection, a minimum duration or a maximum duration, said video sequences to be encoded on Operating-System-Level virtual environments running in parallel; second processing logic configured to calculate, for each video sequence, based on the video sequence and a target coding time of the video content, a target computing capacity of an Operating-System-Level virtual environment to code said video sequence; third processing logic configured to create, for each video sequence, an Operating-System-Level virtual environment of the target computing capacity, and cause an allocation of the Operating-System-Level virtual environment to a physical machine in the cluster of physical machines.

Advantageously, the second processing logic is configured to calculate, for a video sequence, the target computing capacity of an Operating-System-Level virtual environment to code said video sequence based on a target computing capacity of an Operating-System-Level virtual environment to code a reference video sequence, and a ratio of a parameter representative of the video sequence and a parameter representative of the reference video sequence.

Advantageously, the parameter representative of the video sequence is a duration of the video sequence, a parameter representative of the complexity of the video sequence, or a combination thereof, and the parameter representative of the reference video sequence is a duration of the reference video sequence, a parameter representative of the complexity of the reference video sequence, or a combination thereof.

Advantageously, the second processing logic is configured to calculate a parameter representative of each video sequence, and select the video sequence having one of a minimum and a maximum parameter as reference video sequence.

Advantageously, the second processing logic is configured to calculate, for each video sequence, the target computing capacity of an Operating-System-Level virtual environment to code said video sequence based on the target coding time of the video content and a duration of the video sequence, a parameter representative of the complexity of the video sequence, or a combination thereof.

Advantageously, the duration of the video sequence is expressed in one of seconds, milliseconds, and number of frames.

Advantageously, the target coding time of the video content is a predefined target computing time.

Advantageously, the target coding time of the video content is calculated based on a duration of a reference video sequence, a parameter representative of the complexity of the reference video sequence, or a combination thereof, and a reference computing capacity of an Operating-System-Level virtual environment.

Advantageously, said reference video sequence is the longest and/or the most complex video sequence in the plurality of video sequences, and the reference computing capacity is equal to the highest computing capacity of an Operating-System-Level virtual environment possibly created by the second processing logic.

Advantageously, the first processing logic is configured to split the video content into video sequences at each scene cut.

Advantageously, the first processing logic is configured to iteratively create video sequences by: verifying if a scene cut is present in an interval between the minimum and the maximum duration from a start of the video content, or a start of the video content which has not been sequenced; if there is, create a video sequence from the start of the video content, or the start of the video content which has not been sequenced, and the scene cut; if not, create a video sequence from the start of the video content, or the start of the video content which has not been sequenced, with a duration equal to the maximum duration.

Advantageously, the second processing logic is configured, upon a modification of the target coding time of the video content, to modify the computing capacities of all or a part of Operating-System-Level virtual environments.

The invention also discloses a Video On Demand encoding device, comprising the scheduler of the invention.

The invention also discloses a method to schedule video processes to be run on a cluster of physical processing capabilities, said method comprising: splitting a video content into a plurality of video sequences based on at least one of a scene cut detection, a minimum duration or a maximum duration, said video sequences to be encoded on Operating-System-Level virtual environments running in parallel; calculating, for each video sequence, based on the video sequence and a target coding time of the video content, a target computing capacity of an Operating-System-Level virtual environment to code said video sequence; creating, for each video sequence, an Operating-System-Level virtual environment of the target computing capacity; causing an allocation of the Operating-System-Level virtual environment to a physical machine in the cluster of physical machines.

Thanks to the invention the coding time of a video content using a plurality of virtual machines is more deterministic.

The invention improves the usage of hardware resources in a cluster of physical machines.

The invention reduces the number of physical machines necessary to deliver an equivalent level of service as prior art solutions, thus allowing saving electric power.

BRIEF DESCRIPTION OF THE DRAWINGS

The invention will be better understood and its various characteristics and advantages will emerge from the following description of a number of exemplary embodiments and its appended figures in which:

- Figure 1 displays a general overview of a cluster of physical machines and a scheduler of video processes in a number of embodiments of the invention ;
- Figure 2 displays an exemplary architecture of a scheduler of video processes in a number of embodiments of the invention ;
- Figure 3 displays an example of dynamic adaptation of resources of virtual machines by a scheduler of video processes in a number of embodiments of the invention ;
- Figures 4a and 4b display two examples of splits of video contents into a plurality of video sequences, in a number of embodiments of the invention;
- Figure 5, a method to schedule video processes to be run on a cluster of physical processing capabilities.

DETAILED DESCRIPTION OF THE INVENTION

In this specification, the invention will be described by way of examples relative to the scheduling of video processes among VMs. However, the invention is not restricted to these examples, and is applicable to any kind of Operating-System-Level virtual environment. For example, the invention is applicable to, but not limited to, Linux containers.

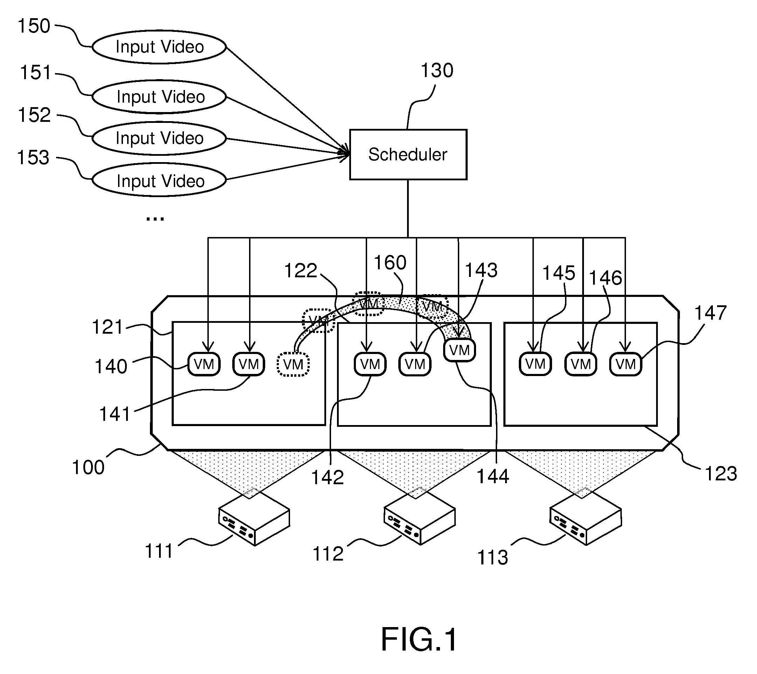

Figure 1 displays a general overview of a cluster of physical machines and a scheduler of video processes in a number of embodiments of the invention.

Cluster 100 comprises three physical machines 111, 112 and 113. Each Physical machine 111, 112, 113 is associated with a VMs host, respectively hosts 121, 122, and 123. Each VMs host is responsible for reserving a portion of resources of a physical machine to a VM and executing said VM using the reserved resources.

Scheduler 130 is configured to create and allocate tasks to process one or more input videos 150, 151, 152, 153. The one or more input videos 150, 151, 152, 153 can be for example video files, or video streams. The scheduler 130 is responsible to balance computing load amongst VMs. The scheduler 130 can create a plurality of processes comprising video encoding or transcoding processes, create VMs to execute these processes and dispatch the VMs onto the physical machines. In the example of figure 1, the scheduler created 8 WMs 140, 141, 142, 143, 144, 145, 146 and 147. In a number of embodiments of the invention, the processes running on the VMs are pure video encoding or video transcoding processes, and other multimedia tasks such as multiplexing/demultiplexing, audio encoding, DRM (Digital Right Management) are performed by other processes running on other VMs. According to other embodiments of the invention, a process running on a VM performs all multimedia tasks for a video sequence: video encoding/transcoding, audio encoding/transcoding, multiplexing/demultiplexing, etc...

When a VM is allocated onto a physical machine, a part of the resources of the physical machine is reserved for the VM. This includes for example a reservation of CPU, a reservation of RAM, a reservation of bandwidth on a network, etc... The sum of resources reserved for the VMs running on the same physical machine cannot exceed the resources of this physical machine. Thus, the resources allocated to each VM shall be specifically tailored to be able to execute the processes handled by the VM in due time, while not wasting resources of the physical machine, and ensuring that all VMs on a physical machine can run properly.

To do so, scheduler 130 is able to define, at the creation of each VM, the resources to allocate to this VM, modify at any time the resources allocated to the VM, or re-allocate a VM to another machine, for example reallocate 160 the VM 144 from physical machine 121 to physical machine 122.

Scheduler 130 can for example be part of a VOD (Video On Demand) device, and be responsible to code videos programs, either in a deterministic time, either in the shortest time possible, with the additional constraint of providing the best quality of service which matches the needs of customers.

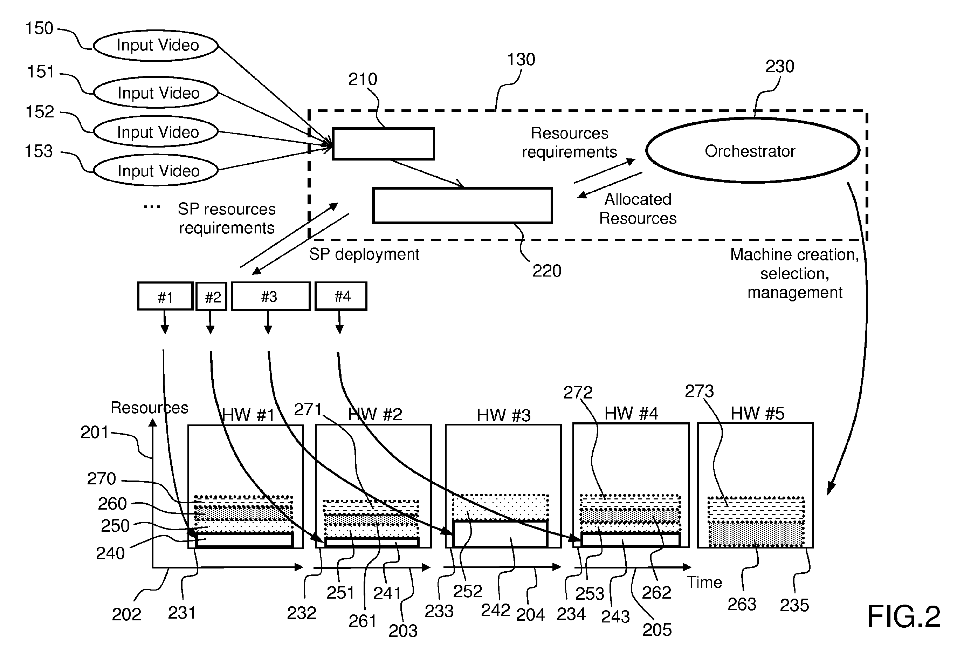

Figure 2 displays an exemplary architecture of a scheduler of video processes in a number of embodiments of the invention.

Scheduler 130 comprises a first processing logic 210, a second processing logic 220, and a third processing logic 230. According to various embodiments of the invention, the first processing logic 210, the second processing logic 220 and the third processing logic 230 may be embedded in or running on two different processing machines, or on a single processing machine configured with two different sets of code instructions. In this example the cluster of physical machines where to allocate the VMs comprises 5 physical machines 231, 232, 233, 234 and 235.

The first processing logic is configured to split a video content into a plurality of video sequences based on at least one of a scene cut detection, a minimum duration and a maximum duration, all video sequences in the video content to be encoded on Operating-System-Level virtual environments running in parallel. For example, the input video 150 is split into 4 sequences, respectively encoded by VMs 240, 241, 242 and 243, each of these four VMs running in parallel; the input video 151 is split into 4 sequences, respectively encoded in VMs 250, 251, 252 and 253, each of these four VMs running in parallel; the input video 152 is split into 4 sequences, respectively encoded in VMs 260, 261, 262 and 263, each of these four VMs running in parallel; the input video 153 is split into 4 sequences, respectively encoded in VMs 270, 271, 272 and 273, each of these four VMs running in parallel. In the example displayed in figure 2, each VM for a different sequence of the same input video is running on a separate physical machine. However, it is possible to allocate 2 VMs to encode two different sequences of a same input video on the same physical machine.

Vertical axis 201 represents the resources of physical machines. When a VM is allocated onto a physical machine, the resources corresponding to the computing capacities of the VM are reserved in the physical machines. Thus, the heights of rectangles 240 to 243, 250 to 253, 260 to 263, 270 to 273 represent the computing capacities of these VMs. The resource and computing capacities represented on the vertical axis can be any resource such as CPU, memory, bandwidth, or a combination thereof.

The horizontal axis 202, 203, 204, 205 represent the time, for each physical machine. Thus, this represents the evolution of computing capacities of VMs 240 to 243, 250 to 253, 260 to 263, 270 to 273 over time. In the example displayed in figure 2, the computing capacities are set once, and not changed afterwards.

Since the video sequences are coded in parallel, cutting the sequences based on scene cut detection delivers optimal quality, since each sequence begins with an Intra frame. Indeed, when the sequences are cut in the middle of a scene, the video encoder is forced to insert an intra frame in the middle of a scene. Thus, a number of video frames will not fully benefit from motion estimation of nearby frames, when they belong to another sequence. Thus, the quality of the video is lowered if the video sequences are not separated at scene cuts.

Meanwhile, having a minimum and a maximum duration of video sequence is also advantageous. Indeed, having a minimum duration prevents the scheduler to create a VM for a very low number of frames, if a sequence is very short. Meanwhile, having a maximum duration allows having, in case of very long video an extremely long sequence to code independently. Indeed, such a sequence would take an excessive coding time, even if the scheduler allocates a maximum computing capacity to the corresponding VM. If the maximum duration is long enough, this is not problematic in terms of quality of video coding. Indeed, even if the maximum duration may force to split the video sequences in the middle of the scene, if the maximum duration is long enough, some Intra frames would have been put anyway by the encoder in the scene, in order to avoid GOPs (Groups Of Pictures) having an excessive duration, which are known to diminish video quality.

According to various embodiments of the invention the minimum and maximum duration can be expressed for example in seconds, milliseconds, in number of frames, or in any metrics which allows a determination of the boundaries of the sequences.

Many embodiments of the invention are possible to separate the video into sequences based on scene cut detection, minimum duration, maximum duration or a combination thereof. In a number of embodiments of the invention, the first processing logic is configured to split a video content into a plurality of video sequences based on at least one of a scene cut detection, after a minimum duration and before a maximum duration.

For example, the first processing logic may be configured to separate the input video in sequences at each scene cut. This allows obtaining a maximum quality, since the video encoder will not be forced to insert an intra frame within a scene.

The first processing logic may also be configured to verify if a scene cut is present in an interval between the minimum and the maximum duration from a start of the video content, or a start of the video content which has not been sequenced; if there is, the first processing logic will trigger creation of a video sequence from the start of the video content, or the start of the video content which has not been sequenced, and the scene cut; if there is not, the first processing logic will trigger creation of a video sequence from the start of the video content, or the start of the video content which has not been sequenced, with a duration equal to the maximum duration. Thus, the sequences are separated at scene cuts as often as possible, and, if not possible the longest possible sequences are created, thus minimizing the number of separation of sequences in the middle of a scene. With finely tuned parameters, this allows a good compromise between video quality and consistency in the duration of the sequences.

The second processing logic 220 is configured to calculate, for each video sequence, based on the video sequence and a target coding time of the video content, a target computing capacity of an Operating-System-Level virtual environment to code said video sequence. Advantageously, the second processing logic is configured to calculate computing capacities of Operating-System-Level virtual environment in order that the coding times of each video sequence are as close as possible. Thus, coding all sequences of video can be performed nearly at the same time. According to various embodiments of the invention, the computing capacities may be a CPU power, an amount of memory, a bandwidth, or a combination thereof. More generally, the computing capacities may refer to any resource of a VM which has an effect on video coding speed.

In a number of embodiments of the invention, the second processing logic is configured to calculate the processing capability that allows coding a video sequence within a target coding time, based on a duration of the video sequence, a parameter of the complexity of the video sequence, or a combination thereof.

For example, it may be configured to calculate the computing capacities necessary to code the video sequence within the target coding time based on the duration and the resolution of the video, or the number of frames and the resolution of the video. It may also take into account complexity parameters such as a level of movement in the sequence, a level of detail of the images in the sequence, an evaluation of the textures of the sequence, etc... Indeed it is known that video sequences with fast movements are more difficult to code than quiet ones. It is also known that video sequences with complex textures such as water are more difficult to code than simpler textures, and that videos with lots of details are more difficult to code than videos with fewer details.

Thus, the second processing logic can advantageously tailor the processing capabilities of the VM in order that they encode their respective video sequence at about the same time, according to the duration, resolution, complexity of the sequence, or according to any other parameter which has an effect on the coding time of a video sequence.

In a number of embodiments of the invention, the second processing capability is also configured to calculate the computing capabilities necessary to code the video sequence in the target coding time based on a target index of quality of the video, a target bitrate of a video codec, or a combination thereof. Indeed, it is known that, at an equivalent bitrate, it is more complex to code video at a higher quality. Meanwhile it is also known that some video codecs are more computationally intensive than others. Possible target indexes of quality may be for example a PSNR (Peak Signal Noise Ratio), SSIM (Structural SIMilarity), MS-SSIM (Multi-Scale Structural SIMilarity), Delta, MSE (Mean Squared Error), or any other standard or proprietary index. When applicable, such index may be computed on the video as a whole, or a layer of the video, for example one of the R,G,B layer of the RGB colorspace, one of the Y,U,V layer of a YUV colorspace, or any layer or combination of layers of a type of colorspace. Possible video codecs may be any standard or proprietary video codec, for example the H.264/AVC (Advanced Video Codec), H.265/HEVC (High Efficiency Video Codec), MPEG-2 (Motion Picture Experts Group), VP-8, Vp-9, VP-10, etc...Indeed, the invention may be implemented without reference to the coding scheme.

A number of different methods are possible to determine the computing capacities necessary to execute the video coding successfully. For example, European patent application n° 15306385.4 filed by the same applicant discloses a method to determine a computing capacity of a computing machine, using calibrated computer processes, and a method to calculate a computing load of calibrated computed process using a reference computing machine.

In a number of embodiments of the invention, a computing load of a video encoding process is calculated by running a plurality of instances of the process on a reference machine having known computing capacity while each of the instances is able to execute successfully, and thus determining the maximum number of instances of the elementary process that can successfully run in parallel on the reference machine. The computing load of the video encoding process can then be calculated as the computing capacity of the reference machine divided by the maximum number of instances of the elementary process that can successfully run in parallel.

In a number of embodiments of the invention, the computing loads of a number of reference video encoding/transcoding processes are calculated, for different durations, resolutions, video complexities and different target qualities. It is then possible to infer, using both reference computing loads of reference video encoding/transcoding processes, and the characteristics of the video sequence to code, corresponding computing loads of the video encoding processes, and to calculate the computing capabilities of the VM accordingly.

In a number of embodiments of the invention, the second processing logic is configured to calculate processing capacities of the VMs, in order to code the video sequences in a predefined target computing time. It is for example the case if the video needs to be coded in a given time to be broadcasted.

In other embodiments of the invention, the second processing logic is configured to calculate processing capabilities of the VMs, in order to code the video sequences in a coding time which depends on characteristics of a reference video sequence. For example, if an input video needs to be coded as fast as possible, the second processing logic may be configured to determine the coding time of the video sequence which is the longest to code, for example the longest and/ or the most complex video sequence, using the most powerful VM available; set this coding time as the target coding time, and calculate, based on the target coding time and the characteristics of all video sequences, the processing capabilities of the VMs.

In yet other embodiments of the invention, the second processing logic can be configured to calculate the processing capabilities of the VMs directly using a proportionality coefficient between processing capabilities of VMs and durations and/or indexes of complexity of the sequences.

For example, a CPU $CPU_i$ of a VM $VM_i$ to code a sequence i could be calculated based on the duration $d_i$ of the sequence to be coded by $VM_i$, based on the maximum CPU $CPU_{max}$ that the scheduler can allocate,

and the duration $d_{max}$ of the longest sequence, by a formula of the type:

$$CPUi = \frac{CPUmax * di}{dmax}$$

Thus, the highest possible CPU is allocated to the VM coding the longest video sequence, and a CPU proportional to the duration of each sequence is allocated to the VM that code each sequence.

This has the advantage of offering a very simple way of defining the CPU of each VM, in order to code the whole input video as fast as possible. The video sequences of a same input video having usually the same resolution and target quality, this provides a good compromise between efficiency and simplicity.

It is possible to use an equivalent formula for each computing capacity.

The second processing logic can also be configured to calculate the CPU of each VM using both the duration and an index of complexity of the sequence. Thus the formula becomes:

$$CPUi = \frac{CPUmax * di * Ci}{dmax * Cmax}$$

Wherein Ci is a complexity index of the sequence i, and dmax and Cmax are respectively the duration and complexity index of a reference sequence, for which the factor di * Ci is the highest.

Thus, this permits to have an even better computation of the CPU to allocate to each VM. In this example the indexes Ci and Cmax are indexes of the complexity of each video sequence based on characteristics of the sequences such as the level of details, the types of textures, the level of movements, etc... In this example, the video sequence being associated to the most powerful machine is not necessary the longest, but a video sequence which is considered as the longest to code, based both on the duration of the sequence, and the relative complexity of the video within the sequence.

In a number of embodiments of the invention, the third processing logic 230 is configured to create and allocate the VMs on physical machines, based on the computing capabilities calculated by the second processing logic 220.

In a number of embodiments of the invention, the third processing logic 230 is configured to allocate a VM onto the physical machine that has the largest amount of resources available. This favors a balanced dispatching of the computing load amongst the physical machines.

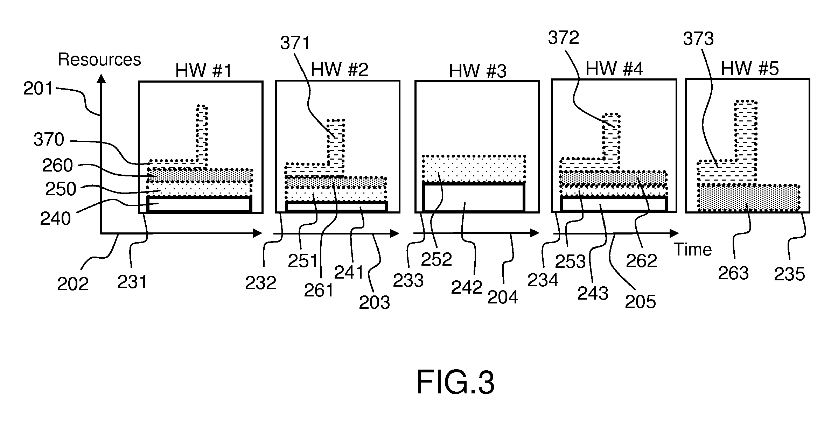

Figure 3 displays an example of dynamic adaptation of resources of virtual machines by a scheduler of video processes in a number of embodiments of the invention.

In a number of embodiments of the invention, scheduler 130 is further configured to modify the resources of the VMs upon a modification of a target coding time, for example the target coding time of one of the input videos 150, 151, 152 and 153. For example, such modification may occur if the video needs to be delivered earlier or later than the initially expected time.

Upon a modification of a process, the second processing logic 220 is configured to re-calculate the processing capabilities of the VMs executing the coding processes of the video sequences of the input video whose target coding time changed. This can be done in different ways according to various embodiments of the invention.

In an embodiment of the invention, the second processing logic is configured to calculate, for each video sequence, the remaining duration or number of frames to code, and calculate, based on the remaining duration and number of frames to code, the corresponding processing capabilities, similarly to the initial calculation described with reference to figure 2.

In other embodiments of the invention, a proportionality coefficient is calculated between the previously remaining target coding time, the new remaining target coding time, the initial processing capabilities and the new processing capabilities. For example, for a video sequence i, the second processing logic 220 can be configured to calculate an updated CPU CPU2 of the VM coding said sequence based on the initial CPU CPU1 of this VM, by a formula of the type:

$$CPU2 = CPU1 * (t_{end1} - t) / (t_{end2} - t)$$

Wherein $t_{end1}$ is the initial target coding time, $t_{end2}$ is the updated target coding time, and t is the elapsed coding time. Thus, the CPU capabilities of the VM are updated proportionally to the increase, or decrease of the remaining target coding time.

The first processing logic 210 is then configured to indicate these changes to the second processing logic 220, which is configured to modify the resources of the VMs accordingly.

Figure 3 displays the result of a modification of the target coding time of input video 153. The target coding time of this input video has been set to an earlier end time. Thus, the remaining coding time is lower, and the second processing capability 220 is configured to re-calculate and increase the computing capacities of the VMs 270, 271, 272, 273, in order that they are able to encode their respective video sequences by the new target time. Diagrams 370, 371, 372 and 373 show the evolution of computing capacities of the VMs 270, 271, 272, 273 over time. The processing capabilities of the 4 VMs are increased at the same time. Thus, all video sequences of the input video 153 are coded earlier, and the whole video is successfully coded by the new target time.

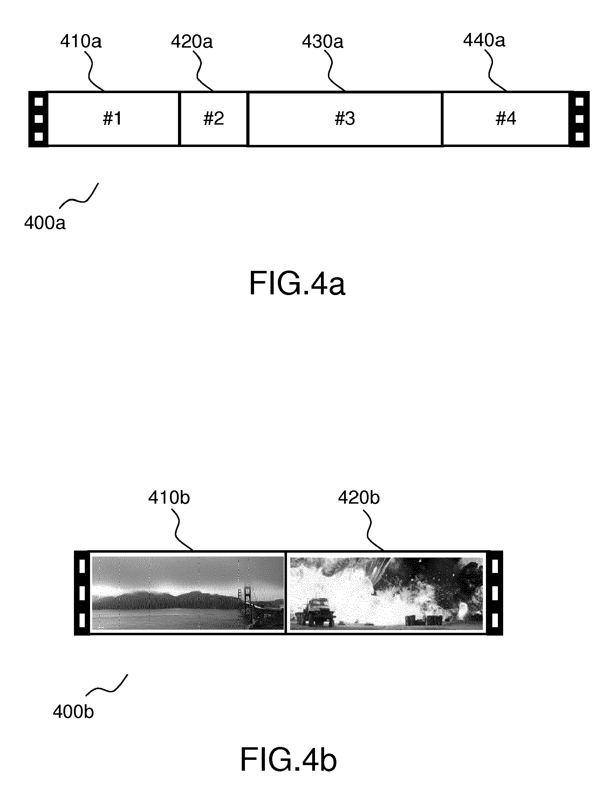

Figures 4a and 4b display two examples of splitting video contents into a plurality of video sequences, in a number of embodiments of the invention.

Figure 4a displays a first example of splitting a video content 400a into four video sequences 410a, 420a, 430a and 440a.

The four video sequences 410a, 420a, 430a and 440a have different durations, for example due to the differences of durations of the scenes of the input video content. In this example, the second processing logic 220 of the invention can be configured to calculate computing capabilities of the VMs which will respectively execute the processes to code video sequences 410a, 420a, 430a and 440a based at least on the duration of the sequences, in order that the coding time of the four sequences is similar.

Figure 4b displays a second example of splitting a video content 400b into two video sequences 410b and 420b.

The two video sequences 410a and 420a have identical durations, but video sequence 420b is much harder to code than video sequence 410b. Indeed, sequence 410b represents a very quiet landscape, with few details, contrasts and movements. On the other hand, sequence 420b displays lots of movements, explosions, details and complex textures. Thus, even with the same duration, sequence 420b is much more complex and long to code to obtain the same quality / rate ratio. Indeed, such complex sequence requires more complex motion estimation and prediction techniques to be coded with a good quality/rate ratio. Thus, in this example, the second processing logic 220 of the invention can be configured to calculate computing capabilities of the VMs which will execute the processes to code respectively video sequences 410b and 420b based at least on an index of complexity of the video sequences in order that the coding time and output quality of the two sequences is similar.

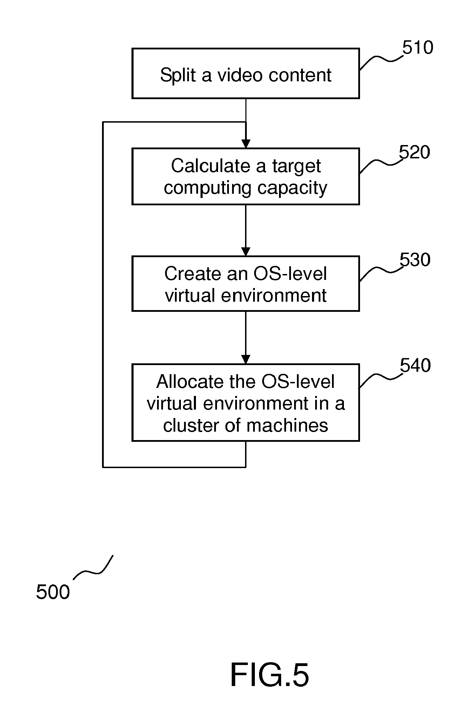

Figure 5 displays a method to schedule video processes to be run on a cluster of physical processing capabilities.

Method 500 comprises a step of splitting 510 a video content into a plurality of video sequences based on at least one of a scene cut detection, a minimum duration and a maximum duration, all video sequences in the video content to be encoded on Operating-System-Level virtual environments running in parallel.

Method 500 further comprises a step 520 of calculating for each video sequence, based on the video sequence and a target coding time of the video content, a target computing capacity of an Operating-System-Level virtual environment to code said video sequence.

Method 500 further comprises a step 530 of creating, for each video sequence, an Operating-System-Level virtual environment of the target computing capacity.

Method 540 further comprises a step 540 of causing an allocation of the Operating-System-Level virtual environment to a physical machine in the cluster of physical machines.

Many different embodiments of a method 500 of the invention are possible, and all embodiments of a scheduler 130 of the invention are applicable to a method 500 of the invention.

The examples described above are given as illustrations of embodiments of the invention. They do not in any way limit the scope of the invention which is defined by the following claims.

**Claims**

1. A scheduler (130) of video processes to be run on a cluster of physical machines, said scheduler comprising:

   - First processing logic (210) configured to split a video content into a plurality of video sequences based on at least one of a scene cut detection, a minimum duration or a maximum duration, said video sequences to be encoded on Operating-System-Level virtual environments running in parallel;
   - Second processing logic (220) configured to calculate, for each video sequence, based on the video sequence and a target coding time of the video content, a target computing capacity of an Operating-System-Level virtual environment to code said video sequence;
   - Third processing logic (230) configured to create, for each video sequence, an Operating-System-Level virtual environment of the target computing capacity, and cause an allocation of the Operating-System-Level virtual environment to a physical machine in the cluster of physical machines.

2. The scheduler of claim 1, wherein the second processing logic is configured to calculate, for a video sequence, the target computing capacity of an Operating-System-Level virtual environment to code said video sequence based on a target computing capacity of an Operating-System-Level virtual environment to code a reference video sequence, and a ratio of a parameter representative of the video sequence and a parameter representative of the reference video sequence.

3. The scheduler of claim 2, wherein the parameter representative of the video sequence is a duration of the video sequence, a parameter representative of the complexity of the video sequence, or a combination thereof, and the parameter representative of the reference video sequence is a duration of the reference video sequence, a parameter representative of the complexity of the reference video sequence, or a combination thereof.

4. The scheduler of one of claims 2 and 3, wherein the second processing logic is configured to calculate a parameter representative of each video sequence, and select the video sequence having one of a minimum and a maximum parameter as reference video sequence.

5. The scheduler of claim 1, wherein the second processing logic is configured to calculate, for each video sequence, the target computing capacity of an Operating-System-Level virtual environment to code said video sequence based on the target coding time of the video content and a duration of the video sequence, a parameter representative of the complexity of the video sequence, or a combination thereof.

6. The scheduler of claim 5, wherein the duration of the video sequence is expressed in one of seconds, milliseconds, and number of frames.

7. The scheduler of one of claims 5 and 6, wherein the target coding time of the video content is a predefined target computing time.

8. The scheduler of one of claims 5 and 6, wherein the target coding time of the video content is calculated based on a duration of a reference video sequence, a parameter representative of the complexity of the reference video sequence, or a combination thereof, and a reference computing capacity of an Operating-System-Level virtual environment.

9. The scheduler of claim 8, wherein said reference video sequence is the longest and/or the most complex video sequence in the plurality of video sequences, and the reference computing capacity is equal to the highest computing capacity of an Operating-System-Level virtual environment possibly created by the second processing logic.

10. The scheduler of one of claims 1 to 9, wherein the first processing logic is configured to split the video content into video sequences at each scene cut.

11. The scheduler of one of claims 1 to 9, wherein the first processing logic is configured to iteratively create video sequences by:

- verifying if a scene cut is present in an interval between the minimum and the maximum duration from a start of the video content, or a start of the video content which has not been sequenced;
- If there is, create a video sequence from the start of the video content, or the start of the video content which has not been sequenced, and the scene cut;
- If not, create a video sequence from the start of the video content, or the start of the video content which has not been sequenced, with a duration equal to the maximum duration .

12. The scheduler of one of claims 1 to 11, wherein the second processing logic is configured, upon a modification of the target coding time of the video content, to modify the computing capacities of all or a part of Operating-System-Level virtual environments.

13. A Video On Demand encoding device, comprising the scheduler of one of claims 1 to 12.

14. A method (500) to schedule video processes to be run on a cluster of physical processing capabilities, said method comprising:

- Splitting (510) a video content into a plurality of video sequences based on at least one of a scene cut detection, a minimum duration or a maximum duration, said video sequences to be encoded on Operating-System-Level virtual environments running in parallel;
- Calculating (520), for each video sequence, based on the video sequence and a target coding time of the video content, a target computing capacity of an Operating-System-Level virtual environment to code said video sequence;
- Creating (530), for each video sequence, an Operating-System-Level virtual environment of the target computing capacity;
- Causing (540) an allocation of the Operating-System-Level virtual environment to a physical machine in the cluster of physical machines.

FIG.1

FIG.2

FIG.3

410a          420a          430a          440a

| #1 | #2 | #3 | #4 |

400a

# FIG.4a

410b          420b

400b

# FIG.4b

Split a video content —510

Calculate a target
computing capacity —520

Create an OS-level
virtual environment —530

Allocate the OS-level
virtual environment in a
cluster of machines —540

500

# FIG.5

Europäisches
Patentamt

European
Patent Office

Office européen
des brevets

**EUROPEAN SEARCH REPORT**

Application Number

EP 15 30 7158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RAFAEL PEREIRA ET AL: "An Architecture for Distributed High Performance Video Processing in the Cloud", CLOUD COMPUTING (CLOUD), 2010 IEEE 3RD INTERNATIONAL CONFERENCE ON, IEEE, PISCATAWAY, NJ, USA, 5 July 2010 (2010-07-05), pages 482-489, XP031739400, ISBN: 978-1-4244-8207-8 * abstract * * figures 3,6 * * page 483, left-hand column, line 20 - line 39 * * page 483, right-hand column, line 41 - line 53 * * page 484, left-hand column, line 8 - line 19 * * page 484, right-hand column, line 17 - page 485, left-hand column, line 10 * * page 485, right-hand column, line 42 - line 50 * * page 486, left-hand column, line 1 - line 2 * * page 487, left-hand column, line 11 - line 28 * * page 488, right-hand column, line 3 - line 8 *<br><br>-----<br><br>-/-- | 1-14 | INV.<br>G06F9/50<br><br><br><br>TECHNICAL FIELDS SEARCHED (IPC)<br><br>G06F<br>H04N |

The present search report has been drawn up for all claims

| Place of search | Date of completion of the search | Examiner |
|---|---|---|
| The Hague | 1 March 2016 | Wirtz, Hanno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 15 30 7158

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Laura Grit ET AL: "Harnessing Virtual Machine Resource Control for Job Management", 1st Workshop on System-level Virtualization for High Performance Computing (HPCVirt 2007), 20 March 2007 (2007-03-20), pages 1-8, XP055253266, Retrieved from the Internet: URL:http://www.csm.ornl.gov/srt/hpcvirt07/papers/grit_hpcvirt07.pdf [retrieved on 2016-02-25] * abstract * * figures 1-5 * * page 1, right-hand column, line 32 - page 2, left-hand column, line 21 * * page 3, left-hand column, line 2 - line 19 * * page 4, left-hand column, line 31 - page 5, left-hand column, line 16 * * page 5, left-hand column, line 29 - line 31 * * page 5, right-hand column, line 5 - line 14 * * page 5, right-hand column, line 42 - line 51 * | 1-14 | |
| A | US 2011/305273 A1 (HE YAMING [US] ET AL) 15 December 2011 (2011-12-15) * figures 3-6c * * paragraph [0008] - paragraph [0013] * * paragraph [0057] * | 1,10,11,14 | TECHNICAL FIELDS SEARCHED (IPC) |
| A | US 2015/189222 A1 (JOHN SAM [US] ET AL) 2 July 2015 (2015-07-02) * figures 3-5 * * paragraph [0045] - paragraph [0046] * * paragraph [0052] - paragraph [0061] * | 1,10,11,14 | |

The present search report has been drawn up for all claims

| Place of search | Date of completion of the search | Examiner |
|---|---|---|
| The Hague | 1 March 2016 | Wirtz, Hanno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7158

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2016

| Patent document cited in search report | | Publication date | Patent family member(s) | | Publication date |
|---|---|---|---|---|---|
| US 2011305273 | A1 | 15-12-2011 | NONE | | |
| US 2015189222 | A1 | 02-07-2015 | US 2015189222 | A1 | 02-07-2015 |
| | | | WO 2015103247 | A1 | 09-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15306385 A